# EUROPEAN PATENT APPLICATION

(11) **EP 2 075 627 A1**
(43) Date of publication of application: **01.07.2009**
(21) Application number: 08172971.7
(22) Date of filing: 29.12.2008
(51) Int. Cl.: G02F 1/13357

(54) **Display apparatus**

(30) Priority: 28.12.2007 JP 2007340793
(71) Applicant: Orion Electric Co., Ltd, Echizen-shi, Fukui 915-8555 (JP)
(72) Inventor: Watanabe, Kazuhiro, Echizen-shi Fukui 915-8555 (JP)
(74) Representative: Vossius & Partner

(57) **Abstract**

A connector-holding unit (16) is provided on the outside of a side frame (8) included in a display panel (15), and a connector (17) is fitted and attached into the connector-holding unit (16). With the connector of a wire rod (18) extending from a cold cathode fluorescent tube (7) fitted into the connector-holding unit (16), a connector of a wire rod (19) extending from a circuit substrate, which is attached to a rear cabinet (3), is connected to the connector (17) on the display panel side.

## Description

The present invention relates to a liquid crystal display apparatus configured such that power can be supplied from a circuit substrate, which is a separate unit from a display panel, to the display panel and relates to a display apparatus that seeks the enhancement of workability as an assembly structure and can hold multiple kinds of light emitting device.

In recent years, as electric apparatus having a display panel (which will be simply called "display apparatus"), various products have been introduced to markets. Representative products may include a liquid crystal display apparatus, a plasma display panel, a personal computer, a cellular phone, a digital camera and so on, and various display methods are applicable thereto. A wide variety of methods varying in accordance with means and arrangements therein exist such as a method that displays a screen by causing a cold cathode fluorescent tube and/or LEDs to emit light from the back of a display surface and a method that displays with an organic substance that emits light in response to the application of voltage thereto on a screen. Furthermore, the display apparatus also vary in their internal structures. However, the realization of easy assembly and simplified products has been demanded.

Here, as an representative example of the display apparatus having a general structure of a liquid crystal display apparatus will be described in detail. The main stream of liquid crystal display apparatus having a depth in a smaller dimension than those of the width and height as a whole has the display part externally including a front cabinet and a rear cabinet. The front cabinet has an opening at a substantial center, and the display panel assembled inside the apparatus can be seen through the opening. Then, the external parts of the front cabinet and rear cabinet internally contain, in addition to the display panel, parts such as a power supply circuit substrate, a control circuit substrate, a speaker and a control button, and the parts are assembled into the front cabinet or the rear cabinet with fixing means. Notably, most liquid crystal display apparatus generally include a stand at the lower end of a display part for allowing the mount on a floor. The removal of the stand from the display part may allow viewing the display part hang on a wall, for example. In this way, the structure can widen the applications.

Next, the outline of the steps of assembling a liquid crystal display apparatus will be described. Generally, a method is adopted including steps of sequentially assembling internal parts such as a display panel, a speaker and substrates to the internal surface side of the front cabinet with fixing means. For example, the front side of the front cabinet is faced down, and a speaker is mounted from the back of the front cabinet. Then, the display panel is mounted, and substrates are attached to the back side of the display panel, and, then, the connection processing is performed thereon. Finally, the rear cabinet is attached so as to cover the back of the front cabinet. Notably, while the internal parts relating to the invention are only described here, parts such as a control button, a stand support unit and a photoreceptor unit are attached therein in reality. However, the detail description thereon will be omitted herein.

For the purpose of seeking simplified steps and simplified physical distribution, means may be provided for transferring internal parts attached to the cabinet to some extent to the final step. Describing a specific example in detail, substrates attached to the rear cabinet in advance may be transferred to the final step. The parts such as a display panel and a speaker may be sequentially attached to the front cabinet in the final step. Finally, the rear cabinet having the substrates attached may be assembled into the front cabinet for completion. In this method, the attachment of substrates to the rear cabinet in advance can reduce the number of man-hours in the final step. In addition, the case where parts are attached to the cabinet to some extent in a different step before being transferred to the final step can advantageously smooth the physical distribution and resolve the complexity of parts, compared with the case where all parts are attached in the final steps.

However, in the configuration in which the display panel is attached to the front cabinet, a circuit substrate for supplying power thereto is attached to the rear cabinet in advance. Therefore, the connection processing and wire-rod handling within the cabinets may be complicated. In the configuration that the display panel is attached to the rear cabinet, the circuit substrate is positioned on the backside of the display panel, which may cause a spatial problem. Therefore, the connection processing may become significantly difficult and may contribute to the decrease in workability.

Accordingly, a side surface of the rear cabinet may have a hole for connection works, and, after using the hole to perform the connection processing, the hole may be blocked with a lid. However, the hole exclusively for the work may compromise the appearance design, and providing the hole may reduce the strength of the cabinet itself, increase the number of parts due to the addition of the lid part and increase the manufacturing costs, for example. The "Liquid Crystal Display Apparatus" in JP-A-2006-330162 discloses a conventional technology that solves the problems. Avoiding the turn out of the leading direction of the leader of a wire line pulled out from a lamp (which is a cold cathode fluorescent tube) for the backlight through a spacer can prevent the compromise of the workability for attachment of a rear frame and/or a rear cabinet. Furthermore, reduction of the required length of the wire line can seek the reduction in costs.

Accordingly, in a case where a wire line detoured around an edge of a rear frame is to be connected to a circuit board on the back side of the rear frame through a connector, the spacer attached to the wire line can change the leading direction of the leader of the wire line to the direction along one side of the frame. The wire line includes two lead lines separately pulled out from two ends of a lamp including one U-shaped lamp and connected to one connector.

The liquid crystal display apparatus can prevent the compromise of the workability of the attachment of the rear frame and/or the rear cabinet due to the interference of the wire line and/or the lead line pulled out from a lamp (cold cathode fluorescent tube) and can simplify the wire handling structure of the wire line and lead line. However, the direction of the wire rod is only limited, and the connector is not positioned and/or held. Furthermore, the lines are not led to the front surface. Therefore, the assembly structure is not suitable for the wiring works in the assembly to the rear cabinet, which is the spirit of the invention.

Furthermore, the shapes of cold cathode fluorescent tubes may include a substantially straight-line shape (which will be called straight tube) and a substantially U-shape (which will be called U-shaped tube), and the structure allowing the attachment of any forms of cold cathode fluorescent tube is more convenient. The "Liquid Crystal Display Apparatus and Manufacturing Method Thereof" disclosed in JP-A-2006-235124 is a liquid crystal display apparatus allowing easy disassembly or replacement of a liquid crystal panel, other optical members or a backlight such as a fluorescent tube, for example, with a minimum workload.

In the liquid crystal display apparatus, at least a rear chassis, a lamp holder with a backlight attached, a liquid crystal panel and panel fixing hardware are assembled in order in the direction of thickness. The panel fixing hardware has a first hardware-fixing hole, and the rear chassis has a chassis-fixing hole. Furthermore, a first fixing member is provided that extends through the first hardware-fixing hole and chassis-fixing hole.

The "Backlight Assembly and Liquid Crystal Display Apparatus Having the Same" in JP-A-2004-55524 is a backlight assembly suitable for realizing a large screen. Accordingly, a first container includes two or more members and has a frame shape formed by engagement of the members. The first container contains one or more lamps that emit light and a light-diffusing member. Even when the size of the first container increases as the sizes of the backlight assembly and liquid crystal display apparatus using it gradually increase, members in smaller sizes are manufactured before completing one large first container by assembling them. Therefore, the backlight assembly and liquid crystal display apparatus that can realize a large screen can be enhanced in productivity and assembly accuracy.

By the way, a cold cathode fluorescent tube in those liquid crystal display apparatus is not a U-shaped tube but a straight tube, and the liquid crystal display apparatus do not have a structure supporting a U-shaped tube. A liquid crystal display apparatus employing a U-shaped tube is also known, but it does not have a holding form that can support a straight tube and does not have an attachment structure that can hold any forms of cold cathode fluorescent tube.

The connector arrangement structure of a conventional cold cathode fluorescent tube in a liquid crystal display apparatus has problems as described above.

The problems are those to be solved by the invention, and there is provided a display apparatus having an assembly structure in which substrates are attached to a rear cabinet and a display panel is also placed on the rear cabinet. In this case, connection of a light-emitting device including a cold cathode fluorescent tube with a circuit substrate can be worked without changing their positions. Furthermore, the front cabinet can be attached thereto without the interference of a wire rod and/or connectors that connect the light emitting devices and the circuit substrate. Still further, the display apparatus can hold and allow the attachment of a cold cathode fluorescent tube that is a light emitting device in either form of a straight tube or a U-shaped tube.

A display apparatus according to the invention has an assembly structure in which substrates are attached to a rear cabinet, and a display panel is provided thereon. A light emitting device and a circuit substrate are connected through a connector, and the connector is provided on a side surface of the display panel such that the connection works for the connector can be performed in the position of the display panel to be provided on the rear cabinet. Accordingly, a connector-holding unit is provided on a side frame, which is a component of the display panel.

With the display panel installed on the rear cabinet, a connector with a wire rod extending from the circuit substrate is inserted and is connected to a connector on the display panel side. Then, in the invention, the side frames hold both ends of a cold cathode fluorescent tube, which is the light emitting device. In a case where the cold cathode fluorescent tube is a straight tube, both ends have elastic shock absorbers and are fitted and attached into the side frames through the elastic shock absorbers. On the other hand, in a case where the cold cathode fluorescent tube is a U-shaped tube, the power supply side end is attached to the side frame through an elastic shock absorber while the bending part side end is attached to the side frame with an elastic ring-shaped member.

Because a display apparatus according to the invention has a structure allowing the installation and assembly of substrates and a display panel to a rear cabinet, connection work of a cold cathode fluorescent tube, which is a light emitting device, with a circuit substrate can be performed without changing their positions. A connector with a wire rod extending from a circuit substrate can be connected to a connector mutually connecting adjacent cold cathode fluorescent tubes through a connector on the display panel. The work for connecting the connectors can be performed easily because a connector holding unit is provided on the outside of a side frame, which is a component and a side member of the display panel.

Therefore, with the display panel installed to the rear cabinet, the connection work on the connector with a wire rod extending from the circuit substrate can be performed without the limitation in the spaces on the sides of the rear cabinet. Whether the form of the cold cathode fluorescent tube, which is a light emitting device, is a straight tube or a U-shaped tube, it can be attached to a side frame through an elastic shock absorber and an elastic ring-shaped member.
Fig. 1 is a perspective view showing a display apparatus according to an embodiment of the invention;
Fig. 2 is a perspective view showing a disassembled display panel of the display apparatus;
Fig. 3 is a perspective view showing a state that the display panel is mounted in a rear cabinet of the display apparatus;
Figs. 4A and 4B are perspective views showing a partially enlarged state that a connector is attached to a connector holding unit on a side frame of the display apparatus;
Figs. 5A and 5B are a plan view and bottom view, respectively, showing the side frame;
Fig. 6 is a perspective view showing the display panel;
Figs. 7A and 7B are perspective views showing a state that cold cathode fluorescent tubes of the display apparatus are attached to the side frames;
Fig. 8 is a perspective view showing an elastic shock absorber of the display apparatus; and
Fig. 9 is a partially enlarged perspective view showing the attachment structure of cold cathode fluorescent tubes having one ends connected in a U-shape.

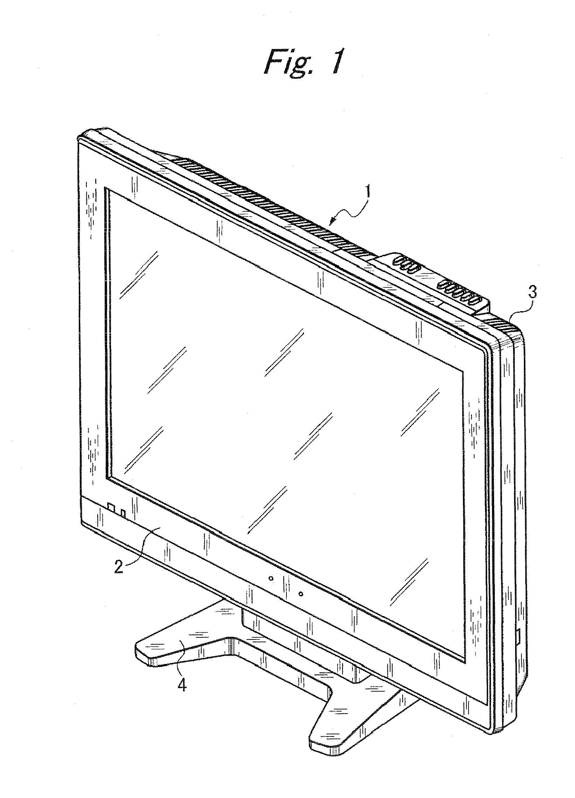

Preferred embodiments of the invention will be described with reference to Figs. 1 to 9 below. It is apparent that the invention is easily applicable to those excluding the embodiments without departing from the spirit and scope of the invention.

Fig. 1 is a perspective view of the front side of a display apparatus according to an embodiment. The display apparatus stands with a stand 4, and a display unit 1 includes a front cabinet 2, a rear cabinet 3, a display panel and other components. The display unit 1 may have various specific structures, but, in the invention, has a structure allowing the arrangement and assembly of internal components including the display panel into the rear cabinet 3 before the final attachment of the front cabinet 2 thereto.

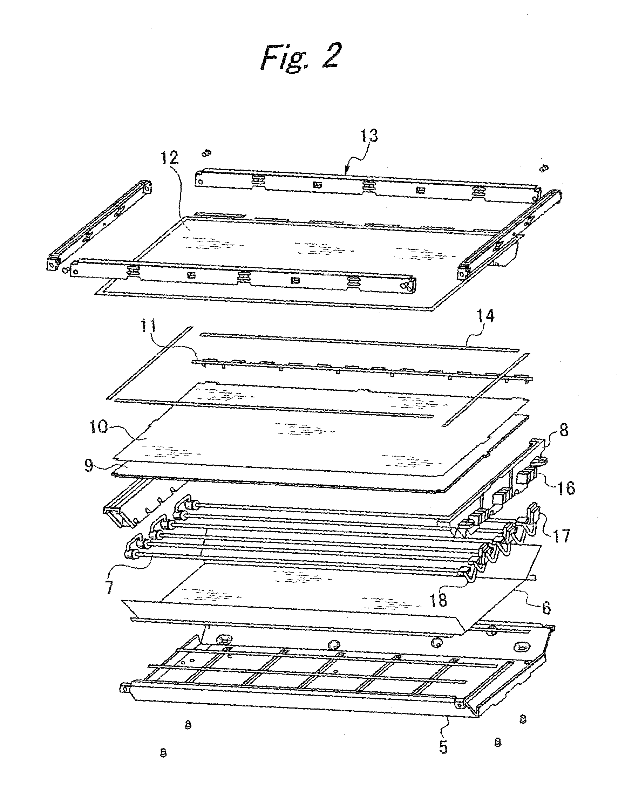

Fig. 2 is a detailed drawing of the display panel and includes a back chassis 5, a reflective sheet 6, a cold cathode fluorescent tube (CCFL) 7, which is a light emitting device, side frames 8, which are side members, a diffuser 9, a diffusion sheet 10, a middle frame 11, liquid crystal cells 12, a front bezel 13, and rubber materials 14.

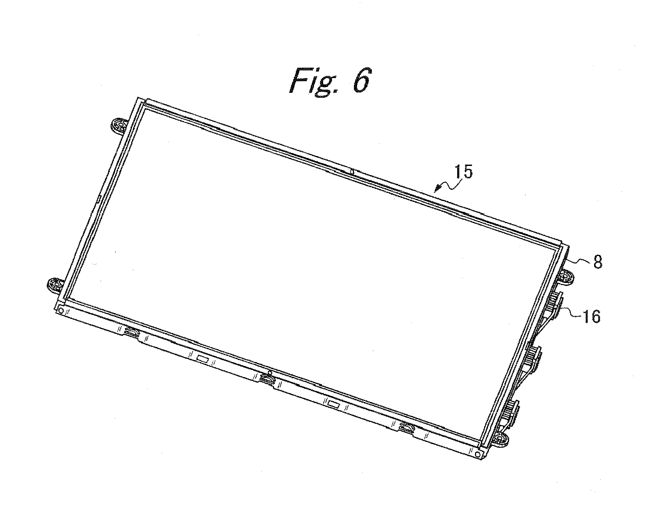

The display apparatus of the invention is assembled by sequentially mounting parts such as substrates and a speaker to the rear cabinet 3 and finally mounting the display panel (refer to Fig. 6) including the assembly of the parts shown in Fig. 2. For that reason, in processing a connector with a wire rod extending from a circuit substrate (not shown) to be attached to the rear cabinet 3, the side frame 8 is used to ease the connection processing by fitting and attaching a connector 17 on the cold cathode fluorescent tube side to a connector holding unit 16 on the side frame 8 and connecting the connector with a wire rod from the circuit substrate to the connector 17.

In other words, the invention can ease the connection work with the circuit substrate by attaching the connector 17 to the side frame 8 though it is difficult to lead the connector with a wire rod extending from the circuit substrate and perform connection processing on it with the cold cathode fluorescent tube 7 if the display panel is installed to the rear cabinet 3.

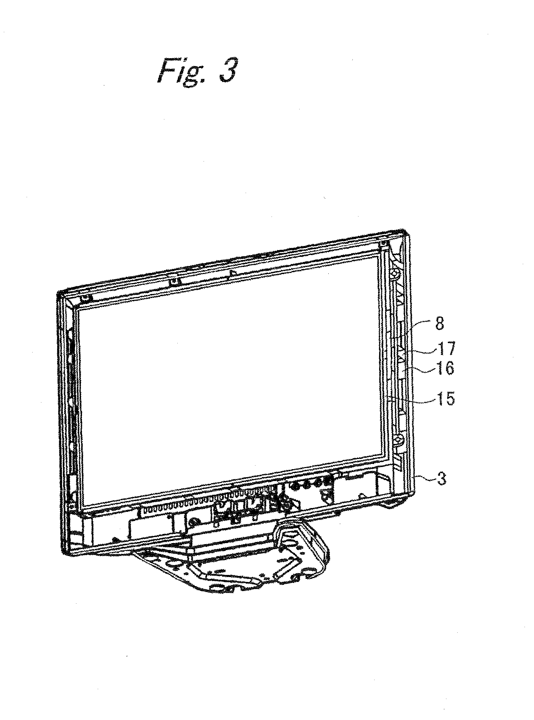

Fig. 3 is a perspective view of a state that a display panel 15 is installed to the rear cabinet 3. One side of side frames 8 and 8 on both sides of the display panel 15 have connector holding units 16, and the connectors 17 are fitted and attached into the connector holding units 16. As shown in Fig. 2, the connectors 17 connect to the wire rods 18 and 18 extending from the power supply side of adjacent two cold cathode fluorescent tubes 7 and 7, and the connector with a wire rod extending from a circuit substrate (not shown) is connected to the connector 17 on the display panel side.

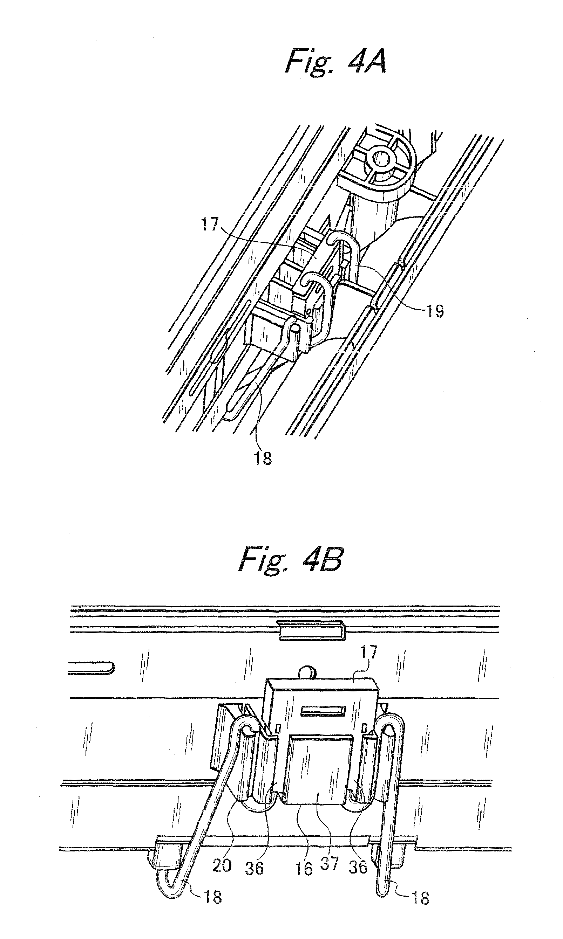

Figs. 4A and 4B show a state that the connector 17 on the display panel side is fitted and attached into the connector holding unit 18 on the side frame 8. Figs. 4A and 4B include a wire rod 18 extending from the cold cathode fluorescent tube 7 and a wire rod 19 extending from the circuit substrate attached to the rear cabinet 3. Here, because the wire rod 18 on the cold cathode fluorescent tube side bends in a substantially S-shape by associating with a hook 20 on the outside of the connector holding unit 16, the connector 17 does not come off from the connector holding unit 16 easily.

In other words, the connector 17 is fitted from a fit-in part at the top of the connector holding unit 16, and a support piece separated by notches 36 and 36 in the fit-in part holds the connector 17 with weak force caused by the unique spring characteristic of a resin molding. However, the connector 17 may come off from the holding unit 16 only with the support piece 37. Therefore, winding and hanging the two wire rods 18 and 18 around and on both hooks 20 and 20 can prevent the rise and removal of the connector 17 from the connector holding unit 16. The connector provided at the tip of the wire rod 19 extending from the circuit substrate is inserted and connected to the connector 17 on the display panel side.

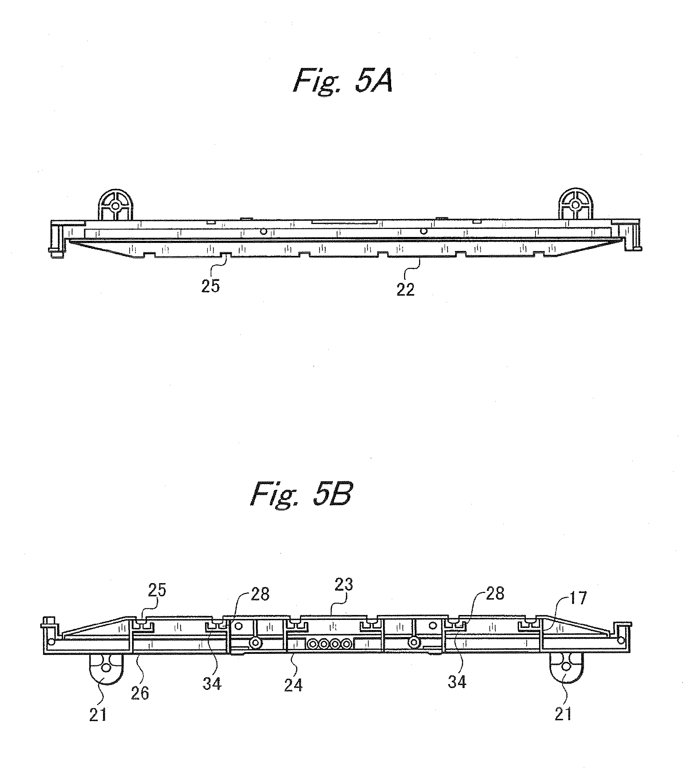

Figs. 5A and 5B show the side frame 8 only which positions on the side from which the wire rod of the cold cathode fluorescent tube does not extend. Fig. 5A is a plan view viewed from the upper part of the inside, and Fig. 5B shows the bottom view viewed from the lower part of the outside. The side frame 8 is a resin molding, and, as shown in Fig. 2, is placed on a side of the display panel 15 and places externally projecting projections 21 and 21 at predetermined positions on the rear cabinet 3.

The side frame 8 has an internal wall 23 and an external wall 24 with a space therebetween, and a lower end 22 of the internal wall 23 has multiple concave grooves 25. A lower end 22 of the external wall 24 has concave grooves 26. Furthermore, partitioning ribs 27 are provided for connecting the internal wall 23 and the external wall 24. Partitions 34 are provided at positions facing the concave grooves 25 inside of the internal wall 23, which form receiving sections 28 with the internal wall 23.

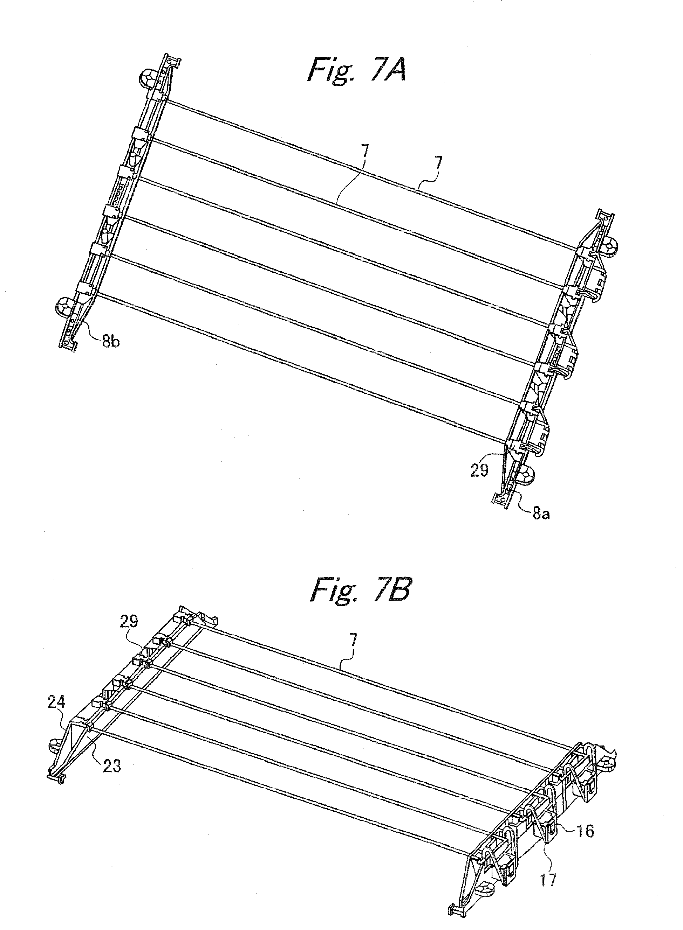

Figs. 7A and 7B are perspective views showing a state that both ends of the multiple cold cathode fluorescent tubes 7 are connected to and are held by side frames 8a and 8b. The cold cathode fluorescent tubes 7 are straight tubes, and elastic shock absorbers 29 are attached at the ends. The elastic shock absorbers 29 are attached between the internal wall 23 and the external wall 24 of the side frames 8a.

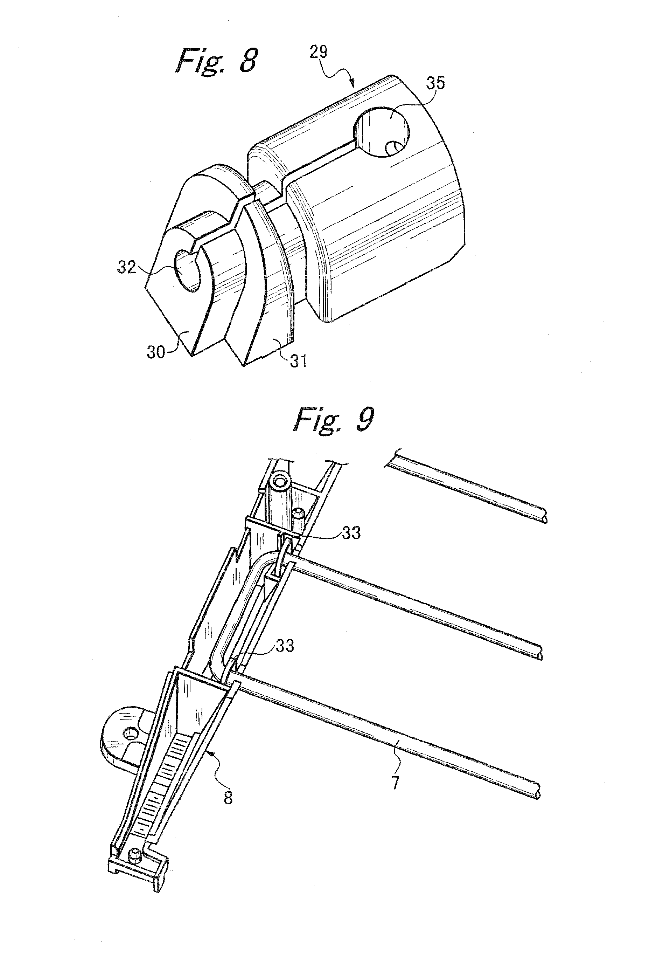

Fig. 8 is a specific example showing the elastic shock absorber 29. The cold cathode fluorescent tube 7 is inserted to a hole 32, and a first engaging section 30 engages with the concave groove 25 at the lower end 22 of the internal wall. A larger second engaging section 31 engages with the receiving section 28 and is positioned there. The elastic shock absorber 29 has a hole 35, and the wire rod 18 extending from the cold cathode fluorescent tube 7 is led through the hole 35 and is connected to the connector 17.

In this way, each of the cold cathode fluorescent tubes 7 is connected to the side frames 8a and 8b through the elastic shock absorbers 29. The form of the cold cathode fluorescent tubes 7 shown in Fig. 2 is not a straight tube, but the cold cathode fluorescent tubes 7 have one ends connected in a U-shape. Fig. 9 shows a case where the cold cathode fluorescent tubes 7 having one ends connected in a U-shape are attached to the side frame 8. In this case, instead of the elastic shock absorbers 29, elastic ring-shaped members 33 having a ring shape externally are used, and each of the elastic ring-shaped members 33 engages with and attached to the receiving section 28 in the side frame 8.

Having described embodiments of the invention in detail, the invention is not limited by the embodiments but various changes can be made without departing from the spirit and scope of the invention. For example, having described the embodiment in detail in which a display panel employing a cold cathode fluorescent tube is employed as a light-emitting device for the display panel, the display panel may employ LEDs. Having described the embodiment of the invention in which the fit-in part of the connector-holding unit has a support piece, the fit-in part may have a concave shape having a continuous circumference, without notches. The fit-in part may be changed appropriately in accordance with the outside shape of the connector to be actually attached thereto. Furthermore, the form and number of the fit-in part or parts for holding ends of the light emitting devices may be changed appropriately in accordance with the type of the light emitting devices to be fitted therein.

## Claims

1. A display apparatus comprising an external cabinet having at least a front cabinet (2) and a rear cabinet (3), a circuit substrate mounted on the rear cabinet (3), and a display panel (15) supplied with power from the circuit substrate, **characterized in that** the display panel (15) has a connector (17) for the power supply, and a connector with a wire rod (19) extending from the circuit substrate is connected to the connector (17) for the power supply.

2. The display apparatus according to Claim 1, wherein the circuit substrate supplies power to a light-emitting device within the display panel (15), and the display panel has a side member having the connector for (17) the power supply.

3. The display apparatus according to Claim 1 or 2, wherein the connectors (17) for the power supply are concentrated on one side surface of the display panel (15).

4. The display apparatus according to any of Claims 1 to 3, wherein a holding unit (16) that removably holds the connector (17) for the power supply is provided on the side member of the display panel (15).

5. The display apparatus according to any of Claims 1 to 4, wherein a connection part of the connector (17) for the power supply is provided on the display surface side of the display panel (15).

6. The display apparatus according to Claim 4 or 5, wherein the holding unit (16) integrally has a fit-in part in which the connector (17) for the power supply fits and engaging sections (30, 31) on both sides of the fit-in part with which the wire rod (19) of the connector (17) for the power supply is engaged.

7. The display apparatus according to Claim 6, wherein the wire rod part (18) of the connector (17) for the power supply engages with the engaging section (20) in a substantially S-shape.

8. The display apparatus according to any of Claims 1 to 7, wherein the side member (8) of the display panel (15) has an internal wall (23) and an external wall (24), the internal wall (23) and the external wall (24) having multiple concave grooves (25) at the lower ends, partitioning ribs (27) that connect the internal wall (23) and the external wall (24) and receiving sections (28) at positions facing the concave grooves (25) on the internal wall (23), and elastic shock absorbers (29) are attached to both ends of the light emitting device in a substantially straight-line shape and are fitted into the space formed by the internal wall (23) and the external wall (24).

9. The display apparatus according to any of Claims 1 to 7, wherein the side member (8) of the display panel (15) has an internal wall (23) and an external wall (24), the internal wall (23) and the external wall (24) having multiple concave grooves (25) at the lower ends, partitioning ribs (27) that connect the internal wall (23) and the external wall (24) and receiving sections (28) at positions facing the concave grooves (25) on the internal wall (23), an elastic shock absorber (29) is attached to an end on the power-supply side of the light emitting device in a substantially U-shape and is fitted into the space formed by the internal wall (23) and the external wall (24), and an elastic ring-shaped member (33) is attached to a bending part of the light emitting device and is fitted into corresponding one of the receiving section (28).

10. The display apparatus according to Claim 8 or 9, wherein the elastic shock absorber (29) has a concave hole (32) in the axial direction to which an end of the light emitting device is inserted and has a first engaging section (30) that engages with corresponding one of the concave grooves (25) at the lower end of the internal wall and a second engaging section (31) that engages with corresponding one of the receiving sections (28).
